# EUROPEAN PATENT APPLICATION

(11) **EP 4 811 563 A1**
(43) Date of publication of application: **23.09.2026**
(21) Application number: 24890079.7
(22) Date of filing: 13.06.2024
(51) Int. Cl.: H01R 13/58

(54) **BATTERY FUSE BOX, BATTERY MODULE AND ELECTRICAL DEVICE**

(30) Priority: 17.11.2023 CN 202323136752 U
(71) Applicant: BYD Company Limited, Shenzhen, Guangdong 518118 (CN)
(72) Inventor: WU, Huxin, Shenzhen, Guangdong 518118 (CN); LV, Shujun, Shenzhen, Guangdong 518118 (CN); ZHANG, Chaojie, Shenzhen, Guangdong 518118 (CN); YU, Guangya, Shenzhen, Guangdong 518118 (CN); LI, Xuedong, Shenzhen, Guangdong 518118 (CN)
(74) Representative: Mathys & Squire
(86) International application number: PCT/CN2024/099013
(87) International publication number: WO 2025/102710

(57) **Abstract**

Provided are a battery fuse box, a battery assembly, and a power-consuming device, and relate to the field of vehicle technologies. The battery fuse box includes a base, a first conductive member, and a second conductive member. The base encloses a first accommodation cavity. A part of the first conductive member is accommodated in the first accommodation cavity, and the other part of the first conductive member passes through a first opening and is sealingly connected to an inner wall of the first opening, and is configured to be electrically connected to a terminal. The second conductive member is accommodated in the first accommodation cavity, and is configured to be electrically connected to a plug-in wire that passes through a second opening and extends in a straight line. A first direction is parallel to an extension direction of the plug-in wire.

## Description

This application claims priority to Chinese Patent Application No. 202323136752.4, filed with the China National Intellectual Property Administration on November 17, 2023, and entitled "BATTERY FUSE BOX, BATTERY ASSEMBLY AND POWER-CONSUMING DEVICE", which is incorporated herein by reference in its entirety.

### TECHNICAL FIELD

The present disclosure relates to the field of vehicle technologies, and specifically, to a battery fuse box, a battery assembly, and a power-consuming device.

### BACKGROUND

After an existing fuse box and a storage battery of a vehicle are mounted, an opening direction of an outlet hole is not parallel to, or even perpendicular to, an extension direction of a plug-in wire of the storage battery. In this case, before being connected to the fuse box, the plug-in wire of the storage battery needs to be bent to be parallel to the opening direction of the outlet hole. As a result, a part of the plug-in wire to be inserted into the outlet hole forms a bending angle of 90° to 180°, generating significant bending stress on the plug-in wire, which affects service life of the wiring harness, and also occupies more wiring space in the vehicle.

### SUMMARY

An object of the present disclosure is to provide a battery fuse box, a battery assembly, and a power-consuming device that solve a problem of a large bending angle at a junction between a positive harness of a storage battery and the fuse box.

To achieve the objects of the present disclosure, the present disclosure provides the following technical solutions:
According to a first aspect, the present disclosure provides a battery fuse box including: a base, the base enclosing a first accommodation cavity, and the first accommodation cavity including a first opening and a second opening; a first conductive member, a part of the first conductive member being accommodated in the first accommodation cavity and being connected to the base, and the other part of the first conductive member passing through the first opening and being electrically connected to a battery terminal outside the base; and a second conductive member, the second conductive member being accommodated in the first accommodation cavity and being connected to the base, the second conductive member and the first conductive member being spaced apart, a projection of the second opening along a first direction at least partially overlapping the second conductive member, the second opening being used to accommodate a plug-in wire extending in a straight line, the first direction being parallel to an extension direction of the plug-in wire, and the second conductive member being configured to be electrically connected to the plug-in wire.

In an implementation, the first conductive member includes a first part and a second part that are connected to each other. The first part is accommodated in the first accommodation cavity, the second part passes through the first opening and is located outside the base, and the second part is sealingly connected to an inner wall of the first opening.

In an implementation, the second part has a fixing part, and the fixing part is detachably connected to the battery terminal.

In an implementation, the battery fuse box further includes a fuse, a first fixing member, and a second fixing member. The fuse is located between the first conductive member and the second conductive member. Both the first fixing member and the second fixing member are connected to the base. The first fixing member is press-fitted and fastened to the first part and one end of the fuse, and the second fixing member is press-fitted and fastened to the second conductive member and the other end of the fuse.

In an implementation, a distance is provided between the first conductive member and the second conductive member, and at least one of the first conductive member and the second conductive member is bent, to allow the battery terminal and the plug-in wire that are located on different planes to be connected to the battery fuse box.

In an implementation, the first accommodation cavity further includes a third opening, and the third opening at least partially overlaps the projection of the second opening along the first direction. a part of the first conductive member that is accommodated in the first accommodation cavity and the second conductive member are both located at the third opening. The battery fuse box further includes a cover, the cover is detachably connected to the base, and the cover is configured to close the third opening.

In an implementation, the third opening and the second opening are respectively located on two opposite sides of the base in the first direction, and an opening area of the third opening is larger than an opening area of the second opening.

In an implementation, the battery fuse box further includes a second sealing ring, the second sealing ring surrounds the third opening, and the second sealing ring abuts against both the base and the cover.

In an implementation, the cover is a flat plate, the cover and the third opening are of the same shape, and the second sealing ring is clamped between an edge of the third opening and a bottom wall of the cover that faces the third opening.

In an implementation, the cover has a second accommodation cavity, and the second accommodation cavity has a fourth opening. a part of the base that is close to the third opening is accommodated in the second accommodation cavity, and a part of the base that is close to the second opening passes through the fourth opening. The second sealing ring is accommodated in the second accommodation cavity, and the second sealing ring abuts against an edge of the base at the third opening and a bottom wall of the cover that is opposite to the fourth opening.

In an implementation, an annular groove is provided in the bottom wall of the cover that is opposite to the fourth opening, the annular groove is used to accommodate the second sealing ring, and a part of the second sealing ring that protrudes from the annular groove abuts against the base.

In an implementation, a first snap-fit structure is provided on an outer surface of the cover, and the first snap-fit structure protrudes from an edge of the fourth opening along the first direction. A second snap-fit structure is provided on an outer surface of the base, and the second snap-fit structure is located on the outer surface of the base that is on a side through which the base passes through the fourth opening, and is located outside the cover. The first snap-fit structure is detachably connected to the second snap-fit structure.

In an implementation, the battery fuse box further includes a flipping member, the flipping member is rotatably connected to the cover, and the flipping member covers the first conductive member and the battery terminal that extend from the first opening.

In an implementation, the battery fuse box further includes a first sealing ring and a locking member. The first sealing ring is accommodated in the first accommodation cavity and located at the second opening. The first sealing ring abuts against an inner wall of the first accommodation cavity, and is configured to be sleeved on a periphery of the plug-in wire. The locking member is located at the second opening, and is detachably connected to the base. The locking member has a through hole, the through hole extends through the locking member in the first direction and communicates with the second opening, and the through hole is used to allow the plug-in wire to pass through.

According to a second aspect, the present disclosure further provides a battery assembly including a battery and the battery fuse box according to any implementation of the first aspect, and a terminal of the battery is electrically connected to the first conductive member of the battery fuse box.

According to a third aspect, the present disclosure further provides a power-consuming device including a power-consuming appliance and a battery assembly according to any implementation of the second aspect, and the power-consuming appliance is electrically connected to the battery assembly.

The battery fuse box provided in the present disclosure includes the base, the first conductive member, and the second conductive member. The base encloses to form the first accommodation cavity. The first part of the first conductive member is accommodated in the first accommodation cavity, and the second part passes through the first opening of the first accommodation cavity and is sealingly connected to the inner wall of the first opening. The first part and the second part can be bent at a junction. The second conductive member is accommodated in the first accommodation cavity and is fastened to the base. The second opening is used to accommodate the plug-in wire. The second conductive member is configured to be electrically connected to the plug-in wire. The projection of the second opening along the first direction at least partially overlaps the second conductive member. The second opening is used to accommodate the plug-in wire extending in a straight line, and the first direction is parallel to the extension direction of the plug-in wire.

The structure of the first conductive member is bent in such a way that the first conductive member can be connected and electrically connected to the battery terminal under different position relationships, so that the battery fuse box is suitable for different wiring configurations. The second conductive member is electrically connected to the plug-in wire along the first direction, so that the direction of the plug-in wire before entering the second opening is parallel to the direction in which the plug-in wire is connected to the second conductive member at the second opening. This reduces the bending angle of the plug-in wire at the second opening, which helps alleviate structural wear on the plug-in wire and prolong the service life of the plug-in wire.

### BRIEF DESCRIPTION OF DRAWINGS

To describe the technical solutions in implementations of the present disclosure or the conventional technology more clearly, the following briefly describes the accompanying drawings for describing implementations or the conventional technology. It is clear that the accompanying drawings in the following description show some implementations of the present disclosure, and a person of ordinary skill in the art may still derive other accompanying drawings from these accompanying drawings without creative efforts.
FIG. 1 is a diagram of the structure of a battery assembly according to an implementation;
FIG. 2 is an exploded view of a battery fuse box according to an implementation;
FIG. 3 is a cross-sectional diagram of FIG. 2 in an A-A direction;
FIG. 4 is a cross-sectional diagram of a battery fuse box according to an implementation;
FIG. 5 is a diagram of assembly of a battery fuse box according to an implementation; and
FIG. 6 is a block diagram of a power-consuming device according to an implementation.

Reference numerals:
1: battery fuse box; 10: base; 20: first conductive member; 30: second conductive member; 40: first sealing ring; 50: fuse; 60: first fixing member; 70: second fixing member; 80: cover; 90: second sealing ring; 100: battery terminal; 200: plug-in wire; 300: battery assembly; 400: power-consuming device; 410: power-consuming appliance;
11: first accommodation cavity; 12: second snap-fit structure; 21: first part; 22: second part; 41: locking member; 81: second accommodation cavity; 82: first snap-fit structure; 83: flipping member;
111: first opening; 112: second opening; 113: third opening; 221: fixing part; 411: through hole; 811: fourth opening; 812: annular groove.

### DESCRIPTION OF EMBODIMENTS

The following clearly and completely describes the technical solutions in implementations of the present disclosure with reference to the accompanying drawings in implementations of the present disclosure. It is clear that the described implementations are merely some but not all of implementations of the present disclosure. All other implementations obtained by a person of ordinary skill in the art based on the implementations in the present disclosure without creative efforts shall fall within the protection scope of the present disclosure.

It will be noted that when an assembly is referred to as being "fastened to" another assembly, the assembly may be directly on another assembly or there may be an intermediate assembly. When an assembly is considered to be "connected" to another assembly, the assembly may be directly connected to another assembly or there may be an intermediate assembly at the same time.

In this disclose, unless otherwise clearly specified and defined, the terms "mount", "interconnect", "connect" and "fasten", and the like will be understood in a broad sense. For example, the terms may indicate a fastened connection, a detachable connection, or integration; or may be a mechanical connection, an electrical connection, or a communication connection; or may be a direct connection, may be an indirect connection through an intermediate medium, or may be internal communication of two elements or an interaction relationship between two elements, unless otherwise clearly limited. A person of ordinary skill in the art may understand specific meanings of the foregoing terms in the present disclosure based on a specific case.

Unless otherwise defined, all technical and scientific terms used in the present disclosure have same meanings as those usually understood by a person skilled in the art of the present disclosure. The terms used in this specification of the present disclosure are merely for the purpose of describing specific embodiments, and are not intended to limit the present disclosure. The term "and/or" used in the present disclosure includes any and all combinations of one or more related listed items.

Further, the terms "first" and "second" are merely intended for a purpose of description and should not be construed as an indication or implication of relative importance or implicit indication of a quantity of indicated technical features. Therefore, a feature limited by "first", "second", or the like may explicitly or implicitly include at least one of the features. In the descriptions of the present disclosure, "a plurality of" means at least two, for example, two, three, or the like, unless otherwise expressly and specifically limited.

The following describes some implementations of the present disclosure in detail with reference to the accompanying drawings. In the case of no conflict, the following embodiments and features in embodiments may be combined with each other.

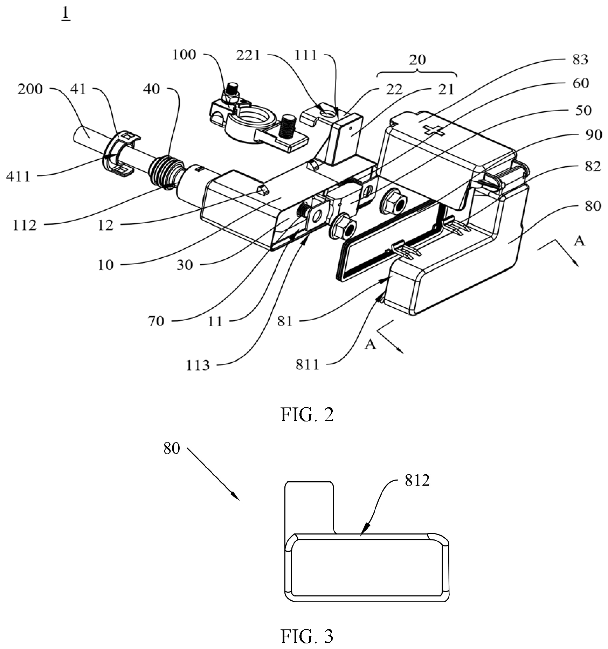

An embodiment of the present disclosure provides a battery fuse box. Referring to FIG. 2 and FIG. 3, the battery fuse box 1 includes a base 10, a first conductive member 20, and a second conductive member 30. The base 10 encloses to form a first accommodation cavity 11, and the first accommodation cavity 11 includes a first opening 111. A part of the first conductive member 20 is accommodated in the first accommodation cavity 11 and is connected to the base 10, and the other part of the first conductive member 20 passes through the first opening 111 and is electrically connected to a battery terminal 100 outside the base 10. As a result, the battery terminal 100 is electrically connected to the other part of the first conductive member 20 outside the base 10, and a current can flow through the other part of the first conductive member 20 outside the base 10 to the first conductive member 20 accommodated in the first accommodation cavity 11.

Optionally, the first conductive member 20 includes a first part 21 and a second part 22 that are connected to each other. The first part 21 is accommodated in the first accommodation cavity 11 and is fastened to the base 10. The second part 22 passes through the first opening 111 and is located outside the base 10. The second part 22 is sealingly connected to an inner wall of the first opening 111, to ensure good sealing and waterproof performance at the first opening 111 of the first accommodation cavity 11, preventing water from an external environment from entering the first accommodation cavity 11 through the first opening 111. In addition, the second part 22 is electrically connected to the battery terminal 100 outside the base 10, so that a current can flow through the first conductive member 20 outside the base 10 to the first conductive member 20 accommodated in the first accommodation cavity 11, thereby achieving conductivity of the battery fuse box 1.

Optionally, the second part 22 has a fixing part 221, and the fixing part 221 is detachably connected to the battery terminal 100. The fixing part 221 may be a mounting hole, the battery terminal 100 has a screw, the screw passes through the mounting hole, and then the second part 22 is press-fitted and fastened to the battery terminal 100 through fitting connection between a nut and the screw. As a result, the first conductive member 20 is electrically connected to the battery terminal 100, and a current can flow from the battery terminal 100 to the first conductive member 20, thereby achieving conductivity of the battery fuse box 1.

The first part 21 and the second part 22 may be an integral structure or interconnected connection components. Extension directions of the first part 21 and the second part 22 may be the same or different, so that the first conductive member 20 is bent at a junction between the first part 21 and the second part 22. A relative positional relationship between the first part 21 and the second part 22 may be specified based on an actual requirement, provided that the first conductive member 20 can be connected and electrically connected to the battery terminal 100 under different positional relationships. In this way, the battery fuse box 1 is suitable for different wiring configurations.

The first accommodation cavity 11 further includes a second opening 112. The second conductive member 30 is accommodated in the first accommodation cavity 11 and is fastened to the base 10. The second conductive member 30 and the first conductive member 20 are spaced apart, and space between the second conductive member 30 and the first conductive member 20 is used for housing the fuse 50. A projection of the second opening 112 along a first direction at least partially overlaps the second conductive member 30. The second opening 112 is used to accommodate the plug-in wire 200 extending in a straight line, and the first direction is parallel to an extension direction of the plug-in wire 200. The second conductive member 30 is configured to be electrically connected to one end of the plug-in wire 200, and the other end of the plug-in wire 200 is electrically connected to another wire or a power-consuming appliance. As a result, a current can flow to the plug-in wire 200 through the second conductive member 30, thereby achieving conductivity of the battery fuse box 1. In addition, a direction of the plug-in wire 200 before entering the second opening 112 is parallel to a direction in which the plug-in wire 200 is connected to the second conductive member 30 at the second opening 112, thereby reducing a bending angle of the plug-in wire 200 at the second opening 112, and preventing the plug-in wire 200 from bending at the second opening 112. This helps alleviate structural wear on the plug-in wire 200, prolong service life of the plug-in wire 200, and increase wiring space for the plug-in wire 200.

The battery fuse box 1 further includes a first sealing ring 40. The first sealing ring 40 is accommodated in the first accommodation cavity 11, is located at the second opening 112, and abuts against an inner wall of the first accommodation cavity 11. The first sealing ring 40 is configured to be sleeved on a periphery of the plug-in wire 200, so that after the plug-in wire 200 passes through the second opening 112, the first sealing ring 40 seals a gap between the plug-in wire 200 and the second opening 112, to ensure good sealing and waterproof performance at the second opening 112 of the first accommodation cavity 11, preventing water from an external environment from entering the first accommodation cavity 11 through the second opening 112. In addition, bending junctions of the first conductive member 20 and the second conductive member 30 are both located in the first accommodation cavity 11. A sealing structure is provided at each of the first opening 111 and the second opening 112 of the first accommodation cavity 11, to ensure good sealing and waterproof performance at the first opening 111 and the second opening 112, thereby greatly improving waterproof performance of the battery fuse box 1.

The battery fuse box 1 provided in the present disclosure includes the base 10, the first conductive member 20, and the second conductive member 30. The base 10 encloses to form the first accommodation cavity 11. The first part 21 of the first conductive member 20 is accommodated in the first accommodation cavity 11, and the second part 22 passes through the first opening 111 of the first accommodation cavity 11 and is sealingly connected to the inner wall of the first opening 111. The first part 21 and the second part 22 can be bent at the junction. The second conductive member 30 is accommodated in the first accommodation cavity 11 and is fastened to the base 10. The second opening 112 is used to accommodate the plug-in wire 200. The second conductive member 30 is configured to be electrically connected to the plug-in wire 200 extending in a straight line. The projection of the second opening 112 along the first direction at least partially overlaps the second conductive member 30. The first direction is parallel to the extension direction of the plug-in wire 200.

The structure of the first conductive member 20 is bent in such a way that the first conductive member 20 can be connected and electrically connected to the battery terminal 100 under different position relationships, so that the battery fuse box 1 is suitable for different wiring configurations. The second conductive member 30 is electrically connected to the plug-in wire 200 along the first direction, so that the direction of the plug-in wire 200 before entering the second opening 112 is parallel to the direction in which the plug-in wire 200 is connected to the second conductive member 30 at the second opening 112. This reduces the bending angle of the plug-in wire 200 at the second opening 112, which helps alleviate structural wear on the plug-in wire 200 and prolong the service life of the plug-in wire 200.

In an implementation, referring to FIG. 2 and FIG. 3, the battery fuse box 1 further includes the fuse 50, a first fixing member 60, and a second fixing member 70. The fuse 50 is located between the first conductive member 20 and the second conductive member 30, and two ends of the fuse 50 are electrically connected to the first conductive member 20 and the second conductive member 30, respectively, so that a current in the first accommodation cavity 11 can flow from the first conductive member 20 to the second conductive member 30 through the fuse 50, thereby achieving conductivity of the battery fuse box 1.

Both the first fixing member 60 and the second fixing member 70 are connected to the base 10. The first fixing member 60 and the second fixing member 70 may form an integral structure with the base 10, or may be fastened to the base 10. The first fixing member 60 is press-fitted and fastened to the first part 21 and one end of the fuse 50, and the second fixing member 70 is press-fitted and fastened to the second conductive member 30 and the other end of the fuse 50, so that a current can flow from the first part 21 to the one end of the fuse 50, and then flow from the other end of the fuse 50 to the second conductive member 30, thereby realizing conductivity of the battery fuse box 1. Optionally, the first fixing member 60 and the second fixing member 70 are screws. The first fixing member 60 passes through the first part 21 and the one end of the fuse 50, and then is press-fitted and fastened to the first part 21 and the one end of the fuse 50 through fitting connection between a nut and the screw, so that the first conductive member 20 is electrically connected to the fuse 50. The second fixing member 70 passes through the second conductive member 30 and the other end of the fuse 50, and then is press-fitted and fastened to the second conductive member 30 and the other end of the fuse 50 through fitting connection between a nut and the screw, so that the fuse 50 is electrically connected to the second conductive member 30, thereby realizing conductivity of the battery fuse box 1. In addition, this improves stability of the connection between the fuse 50 and each of the first conductive member 20 and the second conductive member 30, and the first conductive member 20 and the second conductive member 30 are further fastened.

Optionally, the first fixing member 60 and the second fixing member 70 are fastened to the base 10. The first fixing member 60 and the second fixing member 70 are screws. The screws are sealingly connected to the base 10 with adhesive that has good heat dissipation, which helps improve heat dissipation of the battery fuse box 1 while ensuring waterproof performance of the first accommodation cavity 11.

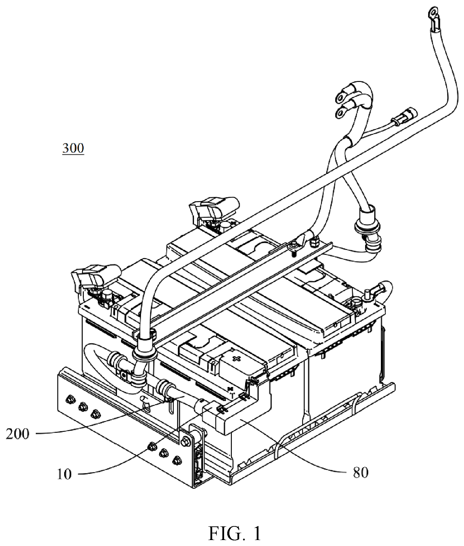

In an implementation, referring to FIG. 1 and FIG. 2, a distance is provided between the first conductive member 20 and the second conductive member 30, and at least one of the first conductive member 20 and the second conductive member 30 is bent, to allow the battery terminal 100 and the plug-in wire 200 that are located on different planes to be connected to the battery fuse box 1.

The battery terminal 100 and the plug-in wire 200 are located on two adjacent surfaces of the battery, and a distance is provided between the battery terminal 100 and the plug-in wire 200. Optionally, the battery terminal 100 is located on a top surface of the battery, and the plug-in wire 200 is located on a side surface of the battery. When the battery fuse box 1 is not provided, the electrical connection between the plug-in wire 200 and the battery terminal 100 requires bending of the plug-in wire 200, which may cause structural wear to the plug-in wire 200 after a long period of time, shortening service life of the plug-in wire 200. The distance is provided between the first conductive member 20 and the second conductive member 30, and at least one of the first conductive member 20 and the second conductive member 30 is bent, so that the battery fuse box 1 can connect the battery terminal 100 and the plug-in wire 200 that are located on different planes. In addition, the direction of the plug-in wire 200 before entering the second opening 112 is parallel to the direction in which the plug-in wire 200 is connected to the second conductive member 30 at the second opening 112, thereby reducing a bending angle of the plug-in wire 200 at the second opening 112, and preventing the plug-in wire 200 from bending at the second opening 112. This helps alleviate structural wear on the plug-in wire 200 and prolong service life of the plug-in wire 200.

Optionally, one of the first conductive member 20 and the second conductive member 30 is bent at 90°, so that the battery fuse box 1 is connected to both the surface on which the battery terminal 100 is located and the surface on which the plug-in wire 200 is located, thereby achieving bending inside the battery fuse box 1, thus preventing the plug-in wire 200 from bending at the second opening 112.

Optionally, both the first conductive member 20 and the second conductive member 30 are bent at 90°, so that the battery fuse box 1 is not only connected to the surface on which the battery terminal 100 is located and the surface on which the plug-in wire 200 is located, but also connected to a surface adjacent to both the two surfaces. Then the first conductive member 20 and the second conductive member 30 are connected through the fuse 50, thereby achieving bending inside the battery fuse box 1 and providing more wiring space for the plug-in wire 200.

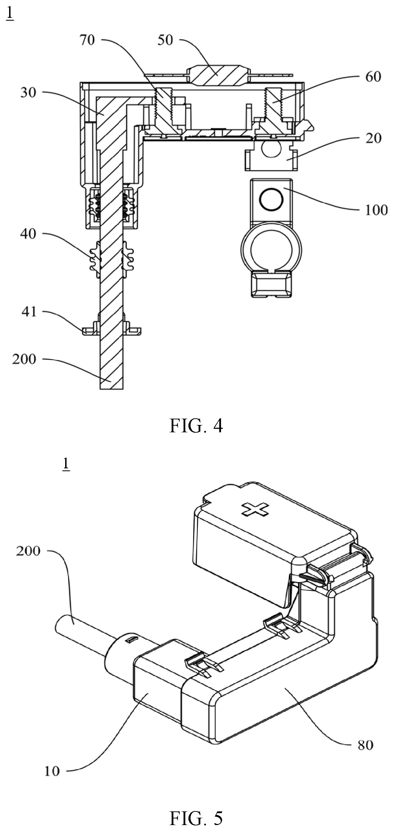

In an implementation, referring to FIG. 2 and FIG. 5, the first accommodation cavity 11 further includes a third opening 113. The third opening 113 at least partially overlaps the projection of the second opening 112 along the first direction. a part of the first conductive member 20 that is accommodated in the first accommodation cavity 11 and the second conductive member 30 are both located at the third opening 113. This allows mounting and disassembly of the fuse 50 to be performed at the third opening 113, thereby facilitating replacement of the fuse 50 after the fuse 50 is blown due to a battery overload, which helps prolong service life of the battery fuse box 1.

The third opening 113 and the second opening 112 are located on two opposite sides of the base 10 in the first direction. An opening area of the third opening 113 is larger than an opening area of the second opening 112, and in the first direction, the opening area of the third opening 113 is greater than or equal to a sum of areas of the first conductive member 20, the second conductive member 30 and the fuse 50, to facilitate mounting and disassembly of the fuse 50 at the third opening 113.

The battery fuse box 1 further includes a cover 80. The cover 80 is detachably connected to the base 10, and is configured to close the third opening 113, so that the third opening 113 is closed. This is conductive to dustproofing and waterproofing of the first conductive member 20, the second conductive member 30 and the fuse 50 at the third opening 113, while allowing the cover 80 and the base 10 to be mounted and disassembled, thereby facilitating replacement of the fuse 50.

Optionally, the battery fuse box 1 further includes a flipping member 83. The flipping member 83 is rotatably connected to the cover 80, and covers the first conductive member 20 and the battery terminal 100 that extend from the first opening 111, so that the first conductive member 20 and the battery terminal 100 are both covered. This helps prevent dust falling onto the first conductive member 20 and the battery terminal 100 from affecting conductivity of the first conductive member 20 and the battery terminal 100. In addition, covering the first conductive member 20 and the battery terminal 100 helps improve aesthetics. The flipping member 83 may be rotatably connected to the cover 80 through a hinge.

In an implementation, referring to FIG. 2, the battery fuse box 1 further includes a second sealing ring 90. The second sealing ring 90 surrounds the third opening 113 and abuts against both the base 10 and the cover 80, to seal a gap between the base 10 and the cover 80, to ensure good sealing and waterproof performance at the third opening 113 of the first accommodation cavity 11, preventing water from an external environment from entering the first accommodation cavity 11 through the third opening 113, thereby significantly improving waterproof performance of the battery fuse box 1.

Optionally, the cover 80 is a flat plate, and the cover 80 and the third opening 113 are of the same shape. The second sealing ring 90 is clamped between an edge of the third opening 113 and a bottom wall of the cover 80 that faces the third opening 113. In the first direction, an area of the cover 80 is greater than or equal to the area of the third opening 113.

In an implementation, referring to FIG. 2, the cover 80 has a second accommodation cavity 81, and the second accommodation cavity 81 has a fourth opening 811. A part of the base 10 that is close to the third opening 113 is accommodated in the second accommodation cavity 81, and a part of the base 10 that is close to the second opening 112 passes through the fourth opening 811. That is, the base 10 is partially accommodated in the second accommodation cavity 81 and partially located outside the second accommodation cavity 81. In comparison with a configuration in which the second sealing ring 90 is clamped between an edge of the cover 80 and the edge of the third opening 113, the second sealing ring 90 is accommodated in the second accommodation cavity 81, so that a contact area between the second sealing ring 90 and the external environment is reduced, thereby reducing a probability of the second sealing ring 90 being corroded and prolonging service life of the second sealing ring 90.

Optionally, the second sealing ring 90 is sleeved on an outer wall of the base 10 accommodated in the second accommodation cavity 81. The second sealing ring 90 abuts against both a side wall of the second accommodation cavity 81 and the outer wall of the base 10 accommodated in the second accommodation cavity 81, to seal a gap between the edge of the third opening 113 and the cover 80. In this way, a contact area between the second sealing ring 90 and the base 10 and a contact area between the second sealing ring 90 and the cover 80 are increased, thereby enhancing stability of the second sealing ring 90 while providing good sealing and waterproof performance for another position on the base 10.

Optionally, in comparison with a configuration in which the second sealing ring 90 is sleeved on the outer wall of the base 10 accommodated in the second accommodation cavity 81, the second sealing ring 90 abuts against an edge of the base 10 at the third opening 113 and abuts against a bottom wall of the cover 80 that is opposite to the fourth opening 811, so that this prevents the second sealing ring 90 from being exposed to an external environment, thereby avoiding corrosion of the second sealing ring 90, and helping prolong service life of the second sealing ring 90. In addition, the second sealing ring 90 seals the gap between the edge of the third opening 113 and the cover 80, to ensure good sealing and waterproof performance at the third opening 113 of the first accommodation cavity 11, preventing water from an external environment from entering the first accommodation cavity 11 through the third opening 113, thereby significantly improving waterproof performance of the battery fuse box 1.

In an implementation, referring to FIG. 2 and FIG. 3, an annular groove 812 is provided in the bottom wall of the cover 80 that is opposite to the fourth opening 811. The annular groove 812 is used to accommodate the second sealing ring 90, and is in interference fit with the second sealing ring 90. A part of the second sealing ring 90 that protrudes from the annular groove 812 abuts against the base 10, which helps improve stability of a position of the second sealing ring 90 relative to the cover 80 and increase a contact area between the second sealing ring 90 and an inner wall of the cover 80, thereby improving sealing performance of the base 10 and the cover 80, and thus significantly improving waterproof performance of the battery fuse box 1.

The annular groove 812 and the third opening 113 are of the same shape. A size of the annular groove 812 is greater than or equal to a size of the third opening 113. The annular groove 812 may be located in a middle area of the bottom wall of the second accommodation cavity 81 or in an edge area of the bottom wall of the second accommodation cavity 81. Optionally, the size of the annular groove 812 is equal to the size of the third opening 113 and is located in the edge area of the bottom wall of the second accommodation cavity 81, so that the side wall of the second accommodation cavity 81 is attached to an outer wall of the edge of the third opening 113, thereby preventing the second sealing ring 90 from being exposed to an external environment, thus avoiding corrosion of the second sealing ring 90. This helps prolong service life of the second sealing ring 90 and further improves waterproof performance of the battery fuse box 1.

In an implementation, referring to FIG. 2 and FIG. 5, a first snap-fit structure 82 is provided on an outer surface of the cover 80, and the first snap-fit structure 82 protrudes from an edge of the fourth opening 811 along the first direction. A second snap-fit structure 12 is provided on an outer surface of the base 10, and the second snap-fit structure 12 protrudes from the edge of the fourth opening 811 in a direction perpendicular to the first direction and from the outer surface of the base 10. The first snap-fit structure 82 is detachably connected to the second snap-fit structure 12, so that the base 10 and the cover 80 can be detachably connected outside the cover 80, to facilitate maintenance after repeated disassembly.

Optionally, the first snap-fit structure 82 is a boss, and the second snap-fit structure 12 is a snap-fit. The snap-fit is in snap fit with the boss to achieve the detachable connection between the base 10 and the cover 80.

In an implementation, referring to FIG. 2 and FIG. 3, the battery fuse box 1 further includes a locking member 41. The locking member 41 is located at the second opening 112, and is detachably connected to the base 10. The locking member 41 has a through hole 411, and the through hole 411 extends through the locking member 41 in the first direction and communicates with the second opening 112. The through hole 411 is used to allow the plug-in wire 200 to pass through, so that the first sealing ring 40 is located between the locking member 41 and the second conductive member 30, to prevent the first sealing ring 40 from sliding out of the first accommodation cavity 11 along the first direction. In addition, this facilitates disassembly and mounting of the locking member 41, thereby facilitating disassembly and connection of the plug-in wire 200 and the second conductive member 30.

A connection structure between the locking member 41 and the base 10 may be on an outer wall of the base 10 at the second opening 112, or on an inner wall of the base 10 at the second opening 112. Optionally, a locking hole is provided in the locking member 41 in a circumferential direction, the base is provided at the outer wall of the base 10 at the second opening 112, and the boss is in snap fit with the locking hole, to achieve the detachable connection between the locking member 41 and the base 10.

The present disclosure further provides a battery assembly 300, with reference to FIG. 1, FIG. 2 and FIG. 4, including a battery and the battery fuse box 1 according to any implementation of the first aspect, and a terminal of the battery is electrically connected to the first conductive member 20 of the battery fuse box 1. The base 10 of the battery fuse box 1 may be attached to any surface adjacent to a surface on which the battery terminal 100 is located.

Optionally, a connector is further provided on an outer surface that is of the base 10 and on which the second conductive member 30 is located, and the connector is detachably connected to a surface of the battery, so that the connector can support part of a weight of the battery fuse box 1, to alleviate a weight at a junction between the first conductive member 20 and the battery terminal 100. This helps keep the direction of the plug-in wire 200 before entering the second opening 112 parallel to the direction in which the plug-in wire 200 is connected to the second conductive member 30 at the second opening 112, thereby alleviating structural wear on the plug-in wire 200 and prolonging service life of the battery fuse box 1.

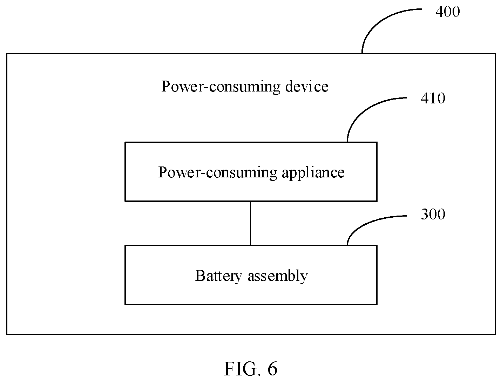

The present disclosure further provides a power-consuming device 400, with reference to FIG. 1 and FIG. 6, including a power-consuming appliance 410 and the battery assembly 300 according to any implementation of the second aspect, and the power-consuming appliance 410 is electrically connected to the battery assembly 300.

It is understood that the power-consuming device in this embodiment has the battery assembly in the foregoing embodiments. Therefore, the power-consuming device in this embodiment has all the technical effects of the battery assembly in the foregoing embodiments. Since the technical effects of the battery assembly have been fully explained in the foregoing embodiments, details are not described herein.

In the descriptions of this specification, reference term such as "embodiment," "specific embodiment," "example," or "specific example," refers to a specific feature, structure, material, or characteristic described with reference to the embodiment or example is included in at least one embodiment or example of the present disclosure. In this specification, schematic expressions of the foregoing terms do not necessarily refer to the same embodiment or example. The described specific feature, structure, material, or characteristic may be combined in a proper manner in any one or more of embodiments or examples. In addition, a person skilled in the art may combine different embodiments or examples described in this specification and features of different embodiments or examples in a case of no conflict.

The foregoing disclosed embodiments are merely preferred embodiments of the present disclosure and will not be construed as a limitation on the scope of the present disclosure. A person of ordinary skill in the art may understand that all or some of processes for implementing the foregoing embodiments and equivalent modifications made in accordance with the claims of the present disclosure shall fall within the scope of the present disclosure.

## Claims

1. A battery fuse box (1), comprising:
a base (10), the base (10) enclosing to form a first accommodation cavity (11), and the first accommodation cavity (11) comprising a first opening (111) and a second opening (112);
a first conductive member (20), a part of the first conductive member (20) being accommodated in the first accommodation cavity (11) and being connected to the base (10), and the other part of the first conductive member (20) passing through the first opening (111) and being electrically connected to a battery terminal (100) outside the base (10); and
a second conductive member (30), the second conductive member (30) being accommodated in the first accommodation cavity (11) and being connected to the base (10), the second conductive member (30) and the first conductive member (20) being spaced apart, a projection of the second opening (112) along a first direction at least partially overlapping the second conductive member (30), the second opening (112) being used to accommodate a plug-in wire (200) extending in a straight line, the first direction being parallel to an extension direction of the plug-in wire (200), and the second conductive member (30) being configured to be electrically connected to the plug-in wire (200).

2. The battery fuse box (1) according to claim 1, wherein the first conductive member (20) comprises a first part (21) and a second part (22) that are connected to each other, the first part (21) is accommodated in the first accommodation cavity (11), the second part (22) passes through the first opening (111) and is located outside the base (10), and the second part (22) is sealingly connected to an inner wall of the first opening (111).

3. The battery fuse box (1) according to claim 2, wherein the second part (22) has a fixing part (221), and the fixing part (221) is detachably connected to the battery terminal (100).

4. The battery fuse box (1) according to claim 2, wherein the battery fuse box (1) further comprises a fuse (50), a first fixing member (60) and a second fixing member (70), the fuse (50) is located between the first conductive member (20) and the second conductive member (30), both the first fixing member (60) and the second fixing member (70) are connected to the base (10), the first fixing member (60) is press-fitted and fastened to the first part (21) and one end of the fuse (50), and the second fixing member (70) is press-fitted and fastened to the second conductive member (30) and the other end of the fuse (50).

5. The battery fuse box (1) according to any one of claims 1 to 4, wherein a distance is provided between the first conductive member (20) and the second conductive member (30), and at least one of the first conductive member (20) and the second conductive member (30) is bent, to allow the battery terminal (100) and the plug-in wire (200) that are located on different planes to be connected to the battery fuse box (1).

6. The battery fuse box (1) according to claim 1, wherein the first accommodation cavity (11) further comprises a third opening (113), the third opening (113) at least partially overlaps the projection of the second opening (112) along the first direction, a part of the first conductive member (20) that is accommodated in the first accommodation cavity (11) and the second conductive member (30) are both located at the third opening (113), the battery fuse box (1) further comprises a cover (80), the cover (80) is detachably connected to the base (10), and the cover (80) is configured to close the third opening (113).

7. The battery fuse box (1) according to claim 6, wherein the third opening (113) and the second opening (112) are respectively located on two opposite sides of the base (10) in the first direction, and an opening area of the third opening (113) is greater than an opening area of the second opening (112).

8. The battery fuse box (1) according to claim 6, wherein the battery fuse box (1) further comprises a second sealing ring (90), the second sealing ring (90) surrounds the third opening (113), and the second sealing ring (90) abuts against both the base (10) and the cover (80).

9. The battery fuse box (1) according to claim 8, wherein the cover (80) is a flat plate, the cover (80) and the third opening (113) are of the same shape, and the second sealing ring (90) is clamped between an edge of the third opening (113) and a bottom wall of the cover (80) that faces the third opening (113).

10. The battery fuse box (1) according to claim 8, wherein the cover (80) has a second accommodation cavity (81), the second accommodation cavity (81) has a fourth opening (811), a part of the base (10) that is close to the third opening (113) is accommodated in the second accommodation cavity (81), a part of the base (10) that is close to the second opening (112) passes through the fourth opening (811), the second sealing ring (90) is accommodated in the second accommodation cavity (81), and the second sealing ring (90) abuts against an edge of the base (10) at the third opening (113) and abuts against a bottom wall of the cover (80) that is opposite to the fourth opening (811).

11. The battery fuse box (1) according to claim 10, wherein an annular groove (812) is provided in the bottom wall of the cover (80) that is opposite to the fourth opening (811), the annular groove (812) is used to accommodate the second sealing ring (90), and a part of the second sealing ring (90) that protrudes from the annular groove (812) abuts against the base (10).

12. The battery fuse box (1) according to claim 10, wherein a first snap-fit structure (82) is provided on an outer surface of the cover (80), the first snap-fit structure (82) protrudes from an edge of the fourth opening (811) along the first direction, a second snap-fit structure (12) is provided on an outer surface of the base (10), the second snap-fit structure (12) is located on the outer surface of the base (10) that is on a side through which the base (10) passes through the fourth opening (811), and is located outside the cover (80), and the first snap-fit structure (82) is detachably connected to the second snap-fit structure (12).

13. The battery fuse box (1) according to claim 6, wherein the battery fuse box (1) further comprise a flipping member (83), the flipping member (83) is rotatably connected to the cover (80), and the flipping member (83) covers the first conductive member (20) and the battery terminal (100) that extend from the first opening (111).

14. The battery fuse box (1) according to claim 1, wherein the battery fuse box (1) further comprise a first sealing ring (40) and a locking member (41), the first sealing ring (40) is accommodated in the first accommodation cavity (11) and located at the second opening (112), the first sealing ring (40) abuts against an inner wall of the first accommodation cavity (11), the first sealing ring (40) is configured to be sleeved on a periphery of the plug-in wire (200), the locking member (41) is located at the second opening (112), the locking member (41) is detachably connected to the base (10), the locking member (41) has a through hole (411), the through hole (411) extends through the locking member (41) in the first direction and communicates with the second opening (112), and the through hole (411) is used to allow the plug-in wire (200) to pass through.

15. A battery assembly (300), comprising a battery and the battery fuse box (1) according to any one of claims 1 to 14, wherein the battery terminal is electrically connected to the first conductive member (20) of the battery fuse box (1).

16. A power-consuming device (400), comprising a power-consuming appliance (410) and the battery assembly (300) according to claim 15, wherein the power-consuming appliance (410) is electrically connected to the battery assembly (300).
